(19) Europäisches Patentamt
European Patent Office
Office européen des brevets

(11) EP 4 462 498 A1

(12) EUROPEAN PATENT APPLICATION
published in accordance with Art. 153(4) EPC

(43) Date of publication:
13.11.2024 Bulletin 2024/46

(51) International Patent Classification (IPC):
$H01M\ 4/131^{(2010.01)}$    $H01M\ 4/525^{(2010.01)}$

(21) Application number: 22918579.8

(52) Cooperative Patent Classification (CPC):
H01M 4/131; H01M 4/525; Y02E 60/10

(22) Date of filing: 04.01.2022

(86) International application number:
PCT/JP2022/000031

(87) International publication number:
WO 2023/131987 (13.07.2023 Gazette 2023/28)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Kabushiki Kaisha Toshiba
Tokyo 105-0023 (JP)

(72) Inventors:
• SAITO, Takasumi
Tokyo 105-0023 (JP)
• OTANI, Natsuki
Tokyo 105-0023 (JP)
• HASEGAWA, Takuya
Tokyo 105-0023 (JP)

(74) Representative: Hoffmann Eitle
Patent- und Rechtsanwälte PartmbB
Arabellastraße 30
81925 München (DE)

(54) ELECTRODE, BATTERY, AND BATTERY PACK

(57) According to one embodiment, provided is an electrode including an active material-containing layer containing an active material. The active material includes a lithium-nickel-cobalt-manganese composite oxide having an average primary particle diameter of 2 $\mu$m or more and 7 $\mu$m or less. A specific surface area $S_{BET}$ of the active material-containing layer according to a $N_2$ gas adsorption method and a pore specific surface area $S_{Hg}$ of the active material-containing layer according to a mercury intrusion method satisfy a relationship of $0.8 < S_{BET}/S_{Hg} < 2.0$. The pore specific surface area $S_{Hg}$ of the active material-containing layer and a pore volume $V_{Hg}$ of the active material-containing layer according to the mercury intrusion method satisfy a relationship of $20$ $m^2/mL < S_{Hg}/V_{Hg} < 60$ $m^2/mL$.

FIG. 1

EP 4 462 498 A1

**Description**

FIELD

Embodiments of the present invention relate to an electrode, battery, and battery pack.

BACKGROUND

Secondary batteries, including nonaqueous electrolyte secondary batteries such as lithium ion secondary batteries, have been implemented not only in electronic devices such as mobile phones but also in vehicles such as hybrid automobiles and electric automobiles, and widely spread. In these applications, large capacity performance, long life performance, improvement in output performance, and the like are demanded on the batteries.

As a negative electrode active material of a nonaqueous electrolyte battery, graphite is generally used. Graphite forms $LiC_6$ by Li insertion, and has a theoretical capacity of 372 mAh/g. In addition, since graphite reacts at a potential of about 0.1 V (vs. $Li/Li^+$) relative to a Li reaction potential (the potential at which insertion-extraction reaction of Li occurs), a battery having a high output and a high energy density can be obtained by using a graphite negative electrode. On the other hand, since the Li insertion reaction potential of graphite is close to a Li precipitation potential, lithium dendrite readily precipitates due to overvoltage or the like. Since an internal short circuit occurs when the dendrite penetrates a separator, a battery using a graphite negative electrode is defective in that safety is low. In addition, in graphite, expansion and contraction occurs along a c-axis direction in accordance with Li insertion-extraction, and therefore graphite undergoes large structural deterioration. When a compound that reacts at a high potential of 0.5 V (vs. $Li/Li^+$) or more relative to the Li reaction potential, for example, spinel lithium titanate ($Li_4Ti_5O_{12}$) is used as another negative electrode active material of the nonaqueous electrolyte battery, precipitation of lithium dendrite can be suppressed. It is known that as a result, risks such as short circuit, self-discharge, and ignition can be avoided, and a battery having excellent life performance can be produced.

Examples of a positive electrode active material of the nonaqueous electrolyte battery include lithium nickel-cobalt-manganate excellent in large capacity performance. A conventional battery using lithium nickel-cobalt-manganate in a positive electrode and lithium titanate in a negative electrode is characterized in that it is excellent in rapid charge-discharge performance, long-term life performance, and low-temperature performance as compared with a battery using a graphite-based negative electrode. On the other hand, there is room for improvement regarding the positive electrode active material. In particular, there is a problem in life performance. During charge-discharge cycles, in lithium nickel-cobalt-manganate particles of the positive electrode, particle cracking of the active material, an irreversible change to a deteriorated structure such as a rock salt type structure, and the like occur. This causes a decrease in capacity, an increase in electric resistance, and the like every time a cycle is undergone. Conventional lithium nickel-cobalt-manganate is generally a polycrystalline system in which primary particles having fine particle shapes are agglomerated to form secondary particles, and many have a specific surface area of about 2 $m^2$/g. In the case of a positive electrode using such an active material, there is a problem that an oxidation reaction between the positive electrode and an electrolyte is apt to occur, particularly in charge and discharge using a high potential, resulting in remarkable gas generation and resistance increase.

CITATION LIST

PATENT LITERATURE

Patent Literature 1: International Publication No. 2016/195036
Patent Literature 2: Jpn. Pat. Appln. KOKAI Publication No. 2012-243463

SUMMARY

TECHNICAL PROBLEM

An objective is to provide an electrode that can realize a battery with excellent life performance, a battery provided with this electrode, and a battery pack provided with this battery.

SOLUTION TO PROBLEM

According to one embodiment, provided is an electrode including an active material-containing layer containing an active material. The active material includes a lithium-nickel-cobalt-manganese composite oxide having an average primary particle diameter of 2 um or more and 7 $\mu$m or less. A specific surface area $S_{BET}$ of the active material-containing layer according to a $N_2$ gas adsorption method and a pore specific surface area $S_{Hg}$ of the active material-containing layer according to a mercury intrusion method satisfy a relationship of $0.8 < S_{BET}/S_{Hg} < 2.0$. The pore specific surface area $S_{Hg}$ of the active material-containing layer and a pore volume $V_{Hg}$ of the active material-containing layer according to the mercury intrusion method satisfy a relationship of 20 $m^2/mL < S_{Hg}/V_{Hg} < 60$ $m^2/mL$.

According to another embodiment, provided is a battery including the above electrode and an electrolyte.

According to yet another embodiment, provided is a battery pack including the above battery.

BRIEF DESCRIPTION OF THE DRAWINGS

FIG. 1 is a plan view schematically showing an example of an electrode according to an embodiment.

FIG. 2 is a sectional view of an example of a battery according to an embodiment, cut in a thickness direction.

FIG. 3 is an enlarged sectional view of a section A of FIG. 2.

FIG. 4 is a partially cutaway perspective view of another example of the battery according to the embodiment.

FIG. 5 is an exploded perspective view of a battery pack of an example according to an embodiment.

FIG. 6 is a block diagram showing an electric circuit of the battery pack shown in FIG. 5.

DETAILED DESCRIPTION

One of conventional means for improving output performance is an improvement in electrode density. When the electrode density is too low, contact between the active materials or between the active material and an electro-conductive agent is deteriorated, which causes deterioration in input/output performance. On the other hand, when the positive electrode density is too high, permeation of an electrolytic solution (liquid electrolyte) is difficult, so that the input-output performance is deteriorated.

In a conventional positive electrode for a lithium secondary battery obtained using a lithium-containing metal composite compound as a positive electrode active material, particles of the positive electrode active material are likely to crack when pressurized for increasing the electrode density of the positive electrode or due to repeated charge and discharge, and a surface area of the positive electrode is increased, leading to an increase in side reactions, whereby an increase in resistance, remarkable gas generation, and the like are observed. So as to suppress the particle cracking, the secondary particle diameter and the particle shape are being controlled. However, when the positive electrode has a large surface area, there is a concern that side reactions increase, whereby the electric resistance increases. When the positive electrode has a small surface area, there is a concern that the diffusion of lithium ions may be inhibited, which may cause deterioration in capacity retention ratio.

Known as one means for increasing the capacity is the use of lithium nickel-cobalt-manganate (NCM) with a high Ni content, which has a large capacity per weight. In such a high nickel NCM positive electrode, side reactions readily occur on a surface of the active material, and the above-described deterioration increases. Attempts have been made to achieve both high capacity and high output, by increasing an average particle diameter of the high nickel- NCM to reduce the specific surface area in order to lower the reactivity, and using in combination therewith, an active material that is a lithium nickel-cobalt-manganate having a low Ni content, which has low reactivity, with an average particle diameter thereof reduced to increase the specific surface area. However, such a configuration does not fundamentally solve the degradation in active material.

Hereinafter, embodiments will be described with reference to the drawings. The same reference signs are applied to common components throughout the embodiments and overlapping explanations are omitted.

Each drawing is a schematic view for explaining the embodiment and promoting understanding thereof; though there may be differences in shape, size and ratio from those in an actual device, such specifics can be appropriately changed in design taking the following explanations and known technology into consideration.

(First Embodiment)

According to the first embodiment, an electrode is provided. The electrode includes an active material-containing layer that contains an active material. The active material includes a lithium-nickel-cobalt-manganese composite oxide having an average primary particle diameter of 2 um or more and 7 $\mu$m or less. With respect to the active material-containing layer, a specific surface area $S_{BET}$ obtained according to a $N_2$ gas adsorption method and a pore specific surface area $S_{Hg}$ according to a mercury intrusion method satisfy a relationship of $0.8 < S_{BET}/S_{Hg} < 2.0$. In addition, the pore specific surface area $S_{Hg}$ obtained according to the mercury intrusion method and a pore volume $V_{Hg}$ obtained according to the mercury intrusion method satisfy a relationship of $20 \ m^2/mL < S_{Hg}/V_{Hg} < 60 \ m^2/mL$.

The electrode according to the embodiment may be a battery electrode. An example of the battery within which the electrode may be included is a secondary battery such as a lithium secondary battery. The secondary battery includes nonaqueous electrolyte secondary batteries containing nonaqueous electrolyte(s). The electrode may be a positive electrode for a battery, for example.

The electrode satisfying the above configuration is an electrode using a single crystal type lithium-nickel-cobalt-manganese composite oxide (NCM). As compared with a positive electrode using a secondary particle type NCM having different surface structure and surface area depending on the manner of agglomeration of primary particles, the electrode has few micropores and also has a uniform surface state. Therefore, the specific surface areas as measured by a $N_2$ gas adsorption method and a mercury intrusion method are of values of the same degree. In addition, when comparison in pore capacity obtained by the mercury intrusion method is made between the single crystal type and the secondary particle type, the single crystal type having fewer pores has a smaller value. A single crystal type NCM in which a value defined by a ratio $S_{BET}/S_{Hg}$ of a specific surface area $S_{BET}$ obtained by the $N_2$ gas adsorption method (based on a BET(Brunauer, Emmett, Teller) method as will be described later) to a pore specific surface area $S_{Hg}$ obtained by the mercury intrusion method is closer to 1.0 can be more improved in life performance. Furthermore, by having a value $S_{Hg}/V_{Hg}$ obtained by dividing the $S_{Hg}$ by a pore volume $V_{Hg}$ obtained by the mercury intrusion method be within a specific range, a contact area between the electrolytic solution and the electrode can be made suitable, and both permeation of the electrolytic solution and suppression of side reactions can be achieved. The single crystal type NCM has fewer micropores and a uniform surface state as compared with the secondary particle-based NCM, and thus the $S_{BET}/S_{Hg}$ tends to be a value close to 1.0, and the $S_{Hg}/V_{Hg}$ also tends to be a large value as compared with those of the others since the pore capacity is also small. By having the single crystal NCM with specific surface area values not varying depending on the measurement method as the active material and controlling the electrode density, the contact area with the electrolytic solution can be controlled, allowing improvement of battery performance.

Such an electrode can further include a current collector. The current collector may have, for example, a foil shape, a band shape, or a plate shape. The active material-containing layer (electrode mixture layer) may be provided on a surface of at least one principal surface of the current collector. That is, the current collector can support the active material-containing layer on one surface or both of obverse and reverse surfaces. The current collector may include a portion that does not support the active material-containing layer on the surfaces thereof. This portion can serve as a current-collecting tab. Alternatively, the electrode may include a current-collecting tab separate from the current collector.

When the ratio $S_{BET}/S_{Hg}$ of the specific surface area $S_{BET}$ as measured by the $N_2$ gas adsorption method to the pore specific surface area $S_{Hg}$ as measured by the mercury intrusion method for the active material-containing layer is within a range of $0.8 < S_{BET}/S_{Hg} < 2.0$, an effective area contributing to an electrode reaction can be accurately controlled, and thus, the electric resistance can be reduced and the gas generation can be suppressed. The specific surface area $S_{BET}$ as measured by the $N_2$ gas adsorption method for the active material-containing layer mainly reflects a specific surface area of micropores and mesopores having a pore diameter on the scale of about 0.1 nm to 100 nm among pores in the electrode. On the other hand, the pore specific surface area $S_{Hg}$ as measured by the mercury intrusion method mainly reflects a specific surface area of mesopores and macropores having a pore diameter on the scale of about 1 nm to 1 mm among pores in the active material-containing layer. That is, the ratio $S_{BET}/S_{Hg}$ between the two is an index representing a proportion of the micropores and macropores in the electrode. When $0.8 > S_{BET}/S_{Hg}$ or $S_{BET}/S_{Hg} > 2.0$, many of either the micropores or the macropores are present. In that case, the effective area contributing to side reactions between the active material and the electrolytic solution (liquid electrolyte) is difficult to control, and on top of that, electric resistance increases since the reaction area increases. More preferably, the ratio of the specific surface area $S_{BET}$ to the pore specific surface area $S_{Hg}$ desirably satisfies a relationship of $0.85 < S_{BET}/S_{Hg} < 1.15$. In an electrode in which a difference in specific surface area is closer than 15%, the above-mentioned electrode reaction area is better controlled, and the effect of reducing the electric resistance is more remarkably obtained.

When the ratio of the pore specific surface area $S_{Hg}$ (unit: $m^2/g$) as measured by the mercury intrusion method to the pore volume $V_{Hg}$ (unit: mL/g) as measured by the mercury intrusion method in the active material-containing layer is in a range of $20 \ m^2/mL < S_{Hg}/V_{Hg} < 60 \ m^2/mL$, an electrode with a small decrease in capacity can be obtained. When $20 \ m^2/mL \geq S_{Hg}/V_{Hg}$, the area contributing to side reactions between the active material and the electrolytic solution in the active material-containing layer is large. Therefore, diffusion of lithium ions in the electrode is promoted, and the capacity retention ratio can be improved, but, on the downside, the electric resistance increases due to an increase in resistance components accompanying side reactions. On the other hand, when $S_{Hg}/V_{Hg} \ 2 \ 60 \ m^2/mL$, the contact area between the electrode active material and the electrolytic solution is small, and permeability of the electrolytic solution into the electrode is reduced, so that the electrode reaction tends to be uneven, and the capacity retention ratio is reduced. When the ratio is in the range of $20 \ m^2/mL < S_{Hg}/V_{Hg} < 60 \ m^2/mL$, the reaction area between the active material and the electrolytic solution and the permeability become appropriate, and a battery excellent in life performance can be produced. More preferably, the ratio is desirably in a range of 40 m²/mL < $S_{Hg}/V_{Hg}$ < 50 m²/mL. In this range, both the effect of improving the capacity retention ratio and the effect of suppressing the increase in resistance can be obtained at higher levels.

In the active material-containing layer, the primary particle diameter of the active material particles (including at least particles of the lithium-nickel-cobalt-manganese composite oxide) is set to 2 $\mu$m or more and 7 $\mu$m or less, whereby the electrode surface area can be easily controlled, and the life performance of the battery can be improved. When the primary particle diameter is less than 2 $\mu$m, the specific surface area of the electrode increases, and a side reaction between the electrode and the electrolyte has a large influence on the life performance. In addition, when the average particle diameter exceeds 7 $\mu$m, a concentration gradient of lithium ions arises within the particles, which leads to local structural deterioration and eventually deterioration in life performance. More preferably, the primary particle diameter is desirably 3 $\mu$m or more and 4.5 um or less. In a more preferable range, the life performance can be further improved by preventing aggregation and isolation of the primary particles.

The active material-containing layer may contain, as an active material, a lithium-nickel-cobalt-manganese composite oxide represented by the formula $Li_aNi_{(1-b-c-d)}Co_bMn_cM_dO_2$. The subscripts in the formula are within ranges of $1 \leq a \leq 1.2$, $0 \leq b \leq 0.4$, $0 \leq c \leq 0.4$, and $0 \leq d \leq 0.1$, respectively. M includes at least one selected from the group consisting of Fe, Cu, Ti, Mg, Al, W, Y, B, Mo, Nb, Zn, Sn, Zr, Ga, and V.

The active material-containing layer can contain an electro-conductive agent and a binder, in addition to the active material. The electro-conductive agent may be blended to enhance current collection performance and to suppress contact resistance between the active material and the current collector. The binder may be blended to bind the dispersed active materials and to bind the active material and the current collector.

A density of the active material-containing layer is preferably more than 3.0 g/cm³ and less than 3.6 g/cm³. In an electrode having a density in the above range, the contact between the active material and the electro-conductive agent is improved, and the electric resistance is reduced. Therefore, with such an electrode, a battery having excellent input/output performance can be produced. When the density exceeds 3.0 g/cm³, the contact between the active material particles and the contact between the active material and the electro-conductive agent are improved, whereby the electric resistance in the active material-containing layer is lowered, and the large current output performance is improved. In addition, mechanical stability of the electrode is improved. When the density is less than 3.6 g/cm³, permeation of the electrolytic solution into the active material-containing layer is promoted, and the output performance and the life performance are improved. In addition, while the active material-containing layer is pressed at a high press pressure in densification of the electrode, precaution should be taken since wear of a pressing device becomes remarkable when the press pressure is too high. More preferably, the density is desirably 3.20 g/cm³ or more and less than 3.50 g/cm³. In a more preferable range, the resistance reduction effect is larger and damage to the active material is reduced, thereby making it possible to maintain a high capacity and a low resistance of the battery for a longer time.

In the active material-containing layer, the pore volume $V_{Hg}$ as measured by the mercury intrusion method is preferably set within a range of 0.03 mL/g $\leq V_{Hg} \leq$ 0.15 mL/g, and the specific surface area $S_{BET}$ as measured by the $N_2$ gas adsorption method is preferably set within a range of 1.0 m²/g $\leq S_{BET} \leq$ 5.0 m²/g. When the pore volume is 0.03 mL/g or more, or the specific surface area $S_{BET}$ is 1.0 m²/g or more, permeation of the electrolytic solution is promoted, and the output performance and the life performance are improved. When the pore volume is 0.15 mL/g or less or the specific surface area $S_{BET}$ is 5.0 m²/g or less, the contact between the active material particles and the contact between the active material and the electro-conductive agent are increased, whereby the electric resistance is further reduced, and the large current output performance is improved. In addition, the mechanical stability of the electrode is increased. Desirably, the pore volume $V_{Hg}$ as measured by the mercury intrusion method is within the range of 0.03 mL/g $\leq V_{Hg} \leq$ 0.15 mL/g, with the specific surface area $S_{BET}$ as measured by the $N_2$ gas adsorption method being within the range of 1.0 m²/g $\leq S_{BET} \leq$ 5.0 m²/g. With an electrode in which the pore volume $V_{Hg}$ according to the mercury intrusion method and the specific surface area $S_{BET}$ according to the $N_2$ gas adsorption method satisfy the above ranges, the contact between the active material and the electro-conductive agent can be improved, so that the electric resistance can be reduced, and a battery excellent in input/output performance can be produced. More desirably, the active material-containing layer further has the preferred density of more than 3.0 g/cm³ and less than 3.6 g/cm³ described above, in addition thereto. More preferably, desirably in the positive electrode active material-containing layer, the pore volume $V_{Hg}$ according to the mercury intrusion method is within a range of 0.05 mL/g $\leq V_{Hg} \leq$ 0.08 mL/g, and the specific surface area $S_{BET}$ according to the $N_2$ gas adsorption method is within a range of 2.5 m²/g $\leq S_{BET} \leq$ 3.0 m²/g. In the more preferable range, the active material, electro-conductive agent, and binder are well dispersed, and appropriate control of the electrode density can be performed easily, therefore, a battery with lower resistance and high input/output performance can be produced.

In addition, the specific surface area of the active material contained in the active material-containing layer is preferably 0.5 m²/g or more and 2.0 m²/g or less. The specific surface area of the active material as used herein refers to a specific surface area as measured by the $N_2$ gas adsorption method for a state of the active material particles alone without forming a layer. When the specific surface area of the active material is 0.5 m²/g or more, the contact area between the active material and the electrolytic solution increases, and the output performance and the life performance can be improved. When the specific surface area of the active material is 2.0 m$^2$/g or less, the contact area between the active material and the electrolytic solution is kept to a moderate size, and the side reactions are suppressed, so that the electric resistance is less likely to increase. Therefore, by having the specific surface area of the active material particles be 0.5 m$^2$/g or more and 2.0 m$^2$/g or less, the contact area between the active material and the electrolytic solution can be made appropriate, and an electrode and a battery having low resistance and excellent life performance can be produced. More preferably, the specific surface area of the active material is desirably 0.5 m$^2$/g or more and 1.0 m$^2$/g or less. In a more preferable range, the contact area between the active material and the electrolytic solution can be easily controlled, and an electrode having low resistance and excellent life performance can be easily obtained.

Preferably in a particle size distribution (particle diameter distribution) for the active material-containing layer, a particle diameter $D_{50}$, at which a cumulative frequency from a small particle diameter side is 50%, falls within a range of 2 $\mu m \leq D_{50} \leq 7$ $\mu m$, and that a ratio $D_{50}/D_{10}$ of a particle diameter $D_{90}$, at which the cumulative frequency from the small particle diameter side in the particle size distribution is 90%, to a particle diameter $D_{10}$, at which the cumulative frequency from the small particle diameter side in the particle size distribution is 10%, falls within a range of $1.0 \leq D_{90}/D_{10} \leq 5.0$. The particle size distribution as used herein refers to a particle size distribution obtained by a laser diffraction scattering method. Details regarding the measurement of the particle size distribution by the laser diffraction scattering method will be described later. In $D_{50}$, on one hand, in addition to the particle diameter of the active material contained in the active material-containing layer, the particle diameters and a content proportions of other electrode members such as an electro-conductive agent may be reflected. On the other hand, in the above-described active material-containing layer satisfying the relationships of $0.8 < S_{BET}/S_{Hg} < 2.0$ and $20$ m$^2$/mL $< S_{Hg}/V_{Hg} < 60$ m$^2$/mL, the average primary particle diameter of the active material and the $D_{50}$ in the particle size distribution of the active material-containing layer tend to coincide with each other. When $D_{50}$ is 2 $\mu m$ or more, the contact area between the active material and the electrolytic solution does not become too large, and side reactions are suppressed, so that the electric resistance is less likely to increase. When $D_{50}$ is 7 $\mu m$ or less, the contact area between the active material and the electrolytic solution can be secured to a certain level or more, and the output performance and the life performance are improved. When the ratio $D_{90}/D_{10}$ of $D_{90}$ to $D_{10}$ is 1.0 or more, a proportion of the active material having a small particle size decreases, and thus resistance increase caused by an increase in side reactions due to an increase in contact area between the active material and the electrolytic solution can be suppressed. When $D_{90}/D_{10}$ is 6.0 or less, a proportion of the active material having a large particle size decreases, and thus the contact area between the active material and the electrolytic solution becomes moderately large, and the output performance and the life performance are improved. Therefore, when $D_{50}$ satisfies 2 $\mu m \leq D_{50} \leq 7$ um and the ratio $D_{90}/D_{10}$ of $D_{90}$ to $D_{10}$ satisfies $1.0 \leq D_{90}/D_{10} \leq 5.0$ in the particle size distribution of the active material-containing layer, the contact area between the active material and the electrolytic solution can be made appropriate, and an electrode and a battery having low resistance and excellent life performance can be produced. Desirably, in the active material-containing layer containing the active material having a preferable specific surface area of 0.5 m$^2$/g or more and 2.0 m$^2$/g or less described above, the $D_{50}$, $D_{90}$, and $D_{10}$ in the particle size distribution satisfy the above relationships. More preferably, it is desirable that $D_{50}$ obtained by particle size distribution measurement of the active material-containing layer satisfy 2 $\mu m \leq D_{50} \leq 5$ $\mu m$, and that the ratio $D_{90}/D_{10}$ of $D_{90}$ to $D_{10}$ satisfy a relationship of $2.0 \leq D_{90}/D_{10} \leq 4.0$. In an active material-containing layer satisfying a more preferable range, the dispersion of each member in the electrode tends to be good, and a state in which the reaction area with the electrolytic solution is suitably controlled tends to be obtained.

A true specific gravity of the active material is preferably 4.0 g/cm$^3$ or more and 6.0 g/cm$^3$ or less. In the active material having a true specific gravity of 4.0 g/cm$^3$ or more, the number of voids contained within the active material particles is small, so the electrode density is easily increased, and thus, the battery capacity and the output performance are easily improved. In an active material having a true specific gravity of 6.0 g/cm$^3$ or less, lithium ion conductivity inside the particles is good, and local deterioration or the like hardly occurs, and thus the life performance is improved. Therefore, by having the true specific gravity of the active material particles be 4.0 g/cm$^3$ or more and 6.0 g/cm$^3$ or less, an electrode and a battery having high battery capacity and long life performance can be produced. More preferably, the true specific gravity of the active material particles is desirably 4.6 g/cm$^3$ or more and 5.0 g/cm$^3$ or less. In the more preferable range, the density of the electrode can be easily controlled, and the performance can be further improved.

[Material]

Next, materials that can be used in the active material-containing layer included in the electrode according to the first embodiment and in a current collector that can be included in the electrode will be described.

<Active material-containing layer>

As mentioned above, the active material-containing layer may contain an electro-conductive agent and a binder, in addition to the active material. The blending proportions of the active material, electro-conductive agent and binder in the active material-containing layer are preferably within the ranges of 80% by mass to 95% by mass of the active material, 0.5% by mass to 18% by mass of the electro-conductive agent, and 0.5% by mass to 17% by mass of the binder.

<Active Material>

The active material-containing layer contains, as an active material, the lithium-nickel-cobalt-manganese composite oxide (for example, $Li_aNi_{(1-b-c-d)}Co_bMn_cM_dO_2$, where $1 \leq a \leq 1.2$, $0 \leq b \leq 0.4$, $0 \leq c \leq 0.4$, and $0 \leq d \leq 0.1$; M includes at least one selected from the group consisting of Fe, Cu, Ti, Mg, Al, W, Y, B, Mo, Nb, Zn, Sn, Zr, Ga, and V) having an average primary particle diameter within a range of 2 um or more and 7 um or less. The active material-containing layer may contain the lithium-nickel-cobalt-manganese composite oxide as the first active material and, further, a second active material other than this.

As the second active material, various oxides, for example, lithium-cobalt composite oxides (for example, $LiCoO_2$), manganese dioxide, lithium-manganese composite oxides (for example, $LiMn_2O_4$ and $LiMnO_2$), lithium-nickel composite oxides (for example, $LiNiO_2$), lithium-nickel-cobalt composite oxides (for example, $LiNi_{0.8}Co_{0.2}O_2$), lithium-containing iron oxides, vanadium oxides containing lithium, chalcogen compounds such as titanium disulfide and molybdenum disulfide, and the like may be included. The electrode may contain one of the above compounds as the second active material, or include two or more of the above compounds as the second active material.

A proportion of a mass of the first active material among an entire mass of active materials contained in the active material-containing layer is preferably 75 mass% or more and 100 mass% or less, and more preferably 80 mass% or more and 100 mass% or less.

The active material can have, for example, a particle shape. That is, the active material-containing layer can contain particles of the active material. The active material particles may be primary particles or a mixture of primary particles and secondary particles.

Preferably among the active material particles, a proportion of the primary particles is large and a proportion of the secondary particles is small. The electrical conductivity inside the secondary particles (inside a hollow structure) is poor, and so, by eliminating the presence of the primary particles contained therein, the contact between the active material particles and the electro-conductive agent is improved, making further reduction of the electric resistance possible. By eliminating aggregation of the active material particles of the electrode into secondary particles, neither insufficient retention of the electrolytic solution nor uneven reactions occurs even if the pore volume is reduced, and the input/output performance is improved.

From the above, it is desirable to resolve the aggregation of secondary particles of the active material is desirably resolved, whereas the primary particles of the active material are desirably not further crushed to a particle size of less than 2 um. By refraining from making the active material particle size be less than 2 um, there is no damage to a crystal structure, and good life performance can be maintained.

In addition, by having the average particle diameter of the active material be 2 um or more, the specific surface area of the electrode can be reduced, and the influence of side reactions between the electrode and the electrolyte on the life performance can be reduced. On the other hand, having the average particle diameter be 7 $\mu$m or less allow reduction of the influence due to the concentration gradient of lithium ions occurring in the particles on the life performance.

<Electro-conductive Agent>

As the electro-conductive agent, a carbon material is preferably contained. Examples of the carbon material include acetylene black, Ketjen black, furnace black, graphite and carbon nanotubes. The active material-containing layer may contain one species of electro-conductive agent, or contain two or more species of electro-conductive agents.

The electro-conductive agent may have, for example, a particle shape. In addition, in order to exhibit good electrical conductivity, the average particle size of the electro-conductive agent is desirably neither too small nor too large, and it is desirable to select an electro-conductive agent having an average particle size suitable for imparting excellent electro-conductivity to the electrode in order to improve a discharge capacity of the battery. For this reason, for example, it is preferable to add acetylene black having an average particle size in a range of 20 nm or more and 100 nm or less and excellent electro-conductivity. A more preferable range of the average particle size of the acetylene black is 30 nm or more and 70 nm or less.

<Binder>

As the binder, a material containing a fluorine atom within its molecule is preferable for being excellent in oxidation resistance and improving life performance. Examples of such a binder include polytetrafluoroethylene (PTFE), polyvinylidene fluoride (PVdF), and fluororubbers. Other than that, as the binder, for example, styrene butadiene rubber, an acrylic resin and a copolymer thereof, polyacrylic acid, polyacrylonitrile, and the like may be used. The active material-containing layer may contain one species of the above binders, or may contain two or more species of the above binders.

<Current Collector>

As the current collector, for example, a metal foil or an alloy foil may be used. Examples of the metal foil include an aluminum foil, a stainless steel foil, and a nickel foil. Examples of the alloy foil include an aluminum alloy, a copper alloy, and a nickel alloy.

Next, a specific example of the electrode according to the first embodiment will be described with reference to the drawings.

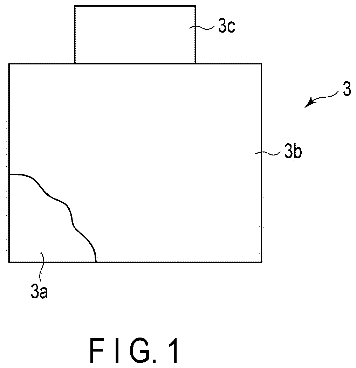

FIG. 1 is a partially cutaway plan view schematically showing an example of the electrode according to the embodiment. Here, an example of a positive electrode is illustrated as an example of the electrode.

A positive electrode 3 shown in FIG. 1 includes a positive electrode current collector 3a and a positive electrode active material-containing layer 3b provided on a surface of the positive electrode current collector 3a. The positive electrode active material-containing layer 3b is supported on the principal surface of the positive electrode current collector 3a.

The positive electrode current collector 3a includes a portion on which the positive electrode active material-containing layer 3b is not provided. This portion serves as, for example, a positive electrode current-collecting tab 3c. In the illustrated example, the positive electrode current-collecting tab 3c is a narrow portion that is narrower than the positive electrode active material-containing layer 3b. The positive electrode current-collecting tab 3c may be narrower than the positive electrode active material-containing layer 3b in such a manner, or may be equal in width to the positive electrode active material-containing layer 3b. Instead of the positive electrode current-collecting tab 3c which is a part of the positive electrode current collector 3a, a separate electrically conductive member may be electrically connected to the positive electrode 3 and may be used as an electrode current-collecting tab (positive electrode current-collecting tab).

[Production Method]

The electrode according to the first embodiment can be produced by, for example, the following method.

First, a main active material (first active material) is prepared. A lithium-nickel-cobalt-manganese composite oxide is synthesized, where the oxide has a chemical composition optimized so that a nickel content rate is a predetermined value or more, and where a primary particle diameter is 2 um or more, having had its particle growth promoted by any selected method such as increasing a firing temperature of a precursor using nickel, cobalt, and manganese sources, increasing a firing time, or increasing a charged amount of a precursor serving as a lithium source, including lithium carbonate.

The lithium-nickel-cobalt-manganese composite oxide prepared as a first positive electrode active material, an optional second positive electrode active material, an optional electro-conductive agent, and an optional binder are put into an appropriate solvent to obtain a mixture. Then, the obtained mixture is put into a stirrer. In this stirrer, the mixture is stirred to obtain a slurry. In the stirring step, by increasing a rotation speed of the stirrer, crushing of the active material/electro-conductive agent particles can be made to proceed, and the value of the specific surface area $S_{BET}$ of the produced electrode can be improved.

The slurry thus obtained is applied onto both the front and back surfaces or one surface of the current collector. At this time, the current collector may have a portion where no slurry is applied to either of the surfaces. The coating film is then dried and pressed. At this time, by increasing a press load, the electrode density can be improved, and the value of the electrode density can be adjusted. In addition, as the press load is increased, it is possible to reduce the pore diameter inside the electrode, the pore specific surface area $S_{Hg}$, and the pore volume $V_{Hg}$, which can be measured by the mercury intrusion method, and so, they can be adjusted to values of the above ranges which provide excellent performance. In this manner, the electrode can be produced.

The pore distribution and particle size distribution in the active material-containing layer can be adjusted to be within the ranges described above, for example, by selecting the species of active material, electro-conductive agent and binder, and adjusting parameters such as the blending ratio, particle diameter of the particles of each of the active material and the electro-conductive agent, conditions for stirring (dispersing) the mixture, and pressing conditions. The electrode according to the first embodiment would not be produced without being enlightened with an idea of containing the NCM active material having an average primary particle diameter of 2 $\mu$m or more and 7 $\mu$m or less, and adjusting, the state of the pores of the active material-containing layer and the like so that a ratio of the specific surface area $S_{BET}$ according to the $N_2$ gas adsorption method to the pore specific surface area $S_{Hg}$ according to the mercury intrusion method is $0.8 < S_{BET}/S_{Hg} < 2.0$, and a ratio of the pore specific surface area $S_{Hg}$ to the pore volume $V_{Hg}$ as measured by the mercury intrusion method satisfy the relationship of $20 \, m^2/mL < S_{Hg}/V_{Hg} < 60 \, m^2/mL$.

For example, when the firing time of the precursor using the nickel, cobalt, and manganese sources is shortened, or the charged amount of the precursor serving as the lithium source is reduced, nucleation is promoted more than particle growth. Therefore, the lithium-nickel-cobalt-manganese composite oxide having a primary particle diameter of 2 um or more can hardly be said to be unintentionally obtainable.

In addition, in the stirring process, a slurry that sufficiently retains an electro-conductive network of the electro-conductive agent can be obtained by diminishing rotation of the stirrer. Conversely, by strengthening the rotation of the stirrer, a slurry in which the active material is well dispersed can be obtained. In an electrode produced using a slurry obtained by diminishing or strengthening the stirring in such a manner, the value of the pore specific surface area $S_{BET}$ can be improved. However, on the other hand, the specific surface area ratio $S_{BET}/S_{Hg}$ tends to be a value out of the above-described range.

In addition, as described above, the electrode density can be improved by increasing the press load, and with higher electrode density, an electrode having good electrical contact and excellent capacity tends to be more easily produced. Conversely, by reducing the press load, the pore diameter inside the electrode, the pore specific surface area $S_{Hg}$, and the pore volume $V_{Hg}$, all of which can be measured by the mercury intrusion method, can be increased, and an excellent electrode having low input resistance can be produced. On the other hand, in an electrode having an extremely high or low density produced by excessive pressing or insufficient pressing, not only does the electrode density deviate from the above-described preferable range, but also, the values of the pore specific surface area $S_{Hg}$ and the pore volume $V_{Hg}$ tend to deviate from the above-described ranges.

Specific example of electrode production will be described in Examples given later.

[Measurement of Electrode]

Various measurement methods for the electrode will be described. Specifically, a method of measuring the composition of the active material, a method of measuring the particle size distribution in the active material-containing layer and the average primary particle diameter of the active material particles by the laser diffraction scattering method, a method of measuring the pore specific surface area $S_{BET}$ by the $N_2$ gas adsorption method, a method of measuring the pore specific surface area $S_{HG}$ and the pore volume $V_{Hg}$ by the mercury intrusion method, a method of measuring the density of the active material-containing layer, and a method of measuring the true specific gravity of the active material will be described.

When analyzing an electrode incorporated in a battery, the electrode is taken out by the following procedures.

First, a battery to be measured is prepared. The battery to be measured should have a discharge capacity of 80% or more of the nominal capacity. That is, an excessively deteriorated battery should not be measured.

Next, the prepared battery is discharged until the open-circuit voltage becomes 2.0 V to 2.2 V. The discharged battery is then transferred into an argon-filled glove box in which the dew point of the internal atmosphere is -70°C. The battery is cut-open in such a glove box. An electrode group is taken out from the cut-opened battery. When the taken-out electrode group includes a positive electrode lead and a negative electrode lead, the positive electrode lead and the negative electrode lead are cut while taking care to avoid short-circuiting between the positive electrode and the negative electrode.

Next, the electrode group is dismantled and disassembled into a positive electrode, a negative electrode, and a separator. For example, the positive electrode is selected as the electrode to be measured. The electrode thus obtained is washed with ethyl methyl carbonate as a solvent. In this washing, the member obtained by disassembly is completely immersed in the ethyl methyl carbonate solvent, and left in that state for 60 minutes.

After washing, the electrode is subjected to vacuum drying. The vacuum drying is carried out by reducing the pressure from atmospheric pressure to -97 kpa or more in a 25°C environment and retaining that state for 10 minutes. The electrode thus taken out through the disassembly, washing and vacuum drying is subjected to the following measurements.

<Measurement of Active Material Composition>

The composition of the electrode active material can be known by measuring a surface of the electrode by X-ray fluorescence (XRF).

<Measurement of Particle Size Distribution by Laser Diffraction Scattering Method>

The particle size distribution with respect to the electrode can be measured by a laser diffraction scattering method described in the following.

After preparing the electrode to be measured, the active material-containing layer is taken off from the electrode using, for example, a spatula to obtain a powdery electrode mixture specimen including the active material. Next, the powdery sample is charged into a measurement cell filled with N-methylpyrrolidone (NMP) up to the concentration at which measurement becomes possible. The capacity of the measurement cell and the measurable concentration vary depending on the particle size distribution measuring device.

The measurement cell containing NMP and the electrode mixture specimen dissolved therein is irradiated with ultrasonic waves at an output of 40 W for 5 minutes. Such ultrasonic irradiation can resolve the agglomeration between the electro-conductive agent particles and the active material particles.

The measurement cell that has been subjected to the ultrasonic treatment is inserted into a particle size distribution measuring device using a laser diffraction scattering method, and the particle size distribution is measured. An example of the particle size distribution measuring device is Microtrac 3100.

In this manner, the particle size distribution of the active material-containing layer can be obtained.

The particle diameter distribution of the active material particles can be obtained by performing the above measurement using a specimen of the active material particles. The average primary particle diameter of the active material can be determined from the particle diameter distribution of the active material particles.

The electrode mixture specimen is dispersed and stirred in NMP, and then solid content obtained by filtering the solvent is fired to remove the binder and the electro-conductive agent, thereby isolating the active material particles. The particle diameter ($D_{50}$), at which the cumulative frequency from the small particle diameter side is 50% in the particle diameter distribution measured using the obtained specimen of the active material particles, corresponds to the average primary particle diameter of the active material.

<Measurement of Pore Specific Surface Area by $N_2$ Gas Adsorption Method>

The pore specific surface area $S_{BET}$ by the $N_2$ (nitrogen) gas adsorption method for the active material-containing layer corresponds to the BET specific surface area of the electrode. The BET specific surface area is a specific surface area determined by the BET method, and is calculated by the $N_2$ gas adsorption method. Analysis is performed, for example, by the following method.

From the electrode, a plurality of strip-shaped pieces as measurement samples each having a planar shape having dimensions of 0.5 cm $\times$ 2.0 cm are cut out. The weight of each of the cut-out measurement samples is measured. Next, 24 measurement samples are loaded into a cell of a measuring device. These measurement samples are placed in the measurement cell for nitrogen adsorption/desorption measurement, and dried at a temperature of 120°C or higher under a $N_2$ gas flow. Thereafter, the specific surface area is measured by a BET one-point method or a BET multi-point method. An example of the measuring device that performs $N_2$ gas adsorption measurement is Quantasorb manufactured by QUANTACHROME.

<Measurement of Pore Specific Surface Area and Pore Volume by Mercury Intrusion Method>

A method for measuring the pore specific surface area $S_{Hg}$ and the pore volume $V_{Hg}$ of the active material-containing layer by the mercury intrusion method will be described below.

From the electrode, a plurality of strip-shaped pieces as measurement samples each having a planar shape having dimensions of 1.25 cm $\times$ 2.50 cm are cut out. The weight of each of the cut-out measurement samples is measured. Next, 24 measurement samples are loaded into a cell of a measuring device. These measurement samples are measured under conditions of an initial pressure of 10 kPa (about 1.5psia, corresponding to a pore diameter of about 120 $\mu$m) and a terminal pressure of 414000 kPa (about 60000 psia, corresponding to a pore diameter of about 0.003 $\mu$m).

Next, from another measurement sample cut out from the same electrode, the active material-containing layer is taken off using, for example, a spatula to obtain a current collector piece. The weight of the current collector piece is measured. The weight of the active material-containing layer that had been contained in the measurement sample is determined by subtracting the weight of the current collector piece from the weight of the measurement sample measured earlier. In addition, the pore distribution excluding the current collector weight is recalculated for a specific range (0.003 $\mu$m to 2 $\mu$m).

From the pore distribution obtained as described above and the weight of the active material-containing layer contained in the measurement sample, the pore volume (unit: mL/g) per g of the weight of the active material-containing layer, the pore specific surface area (unit: m²/g) of the active material-containing layer, respectively, can be obtained.

The pore specific surface area (pore specific surface area $S_H$) is calculated assuming that the shape of the pores is cylindrical.

The analysis principle of mercury porosimetry is based on the following Washburn's equation (1).

$$D = -4\gamma\cos\theta/P \qquad\qquad (1)$$

Here, D is a pore diameter, $\gamma$ is a surface tension of mercury (480 dyne·cm$^{-1}$), $\theta$ is the angle of contact between mercury and the pore wall surface (140°), and P is applied pressure. Since $\gamma$ and $\theta$ are constants, the relationship between the applied pressure P and the pore diameter D is obtained from Washburn's equation (1), and by measuring a mercury intrusion volume at that time, the pore diameter and its volume distribution can be derived.

An example of a measuring apparatus for performing the pore distribution measurement is the pore distribution measurement apparatus Autopore 9520 manufactured by Micromeritics Instrument Corp.

<Measurement of Density of Active Material-Containing Layer>

The density of the active material-containing layer can be measured by the following procedures.

First, the thickness of the prepared electrode is measured using a thickness measuring apparatus. Then, the electrode is punched out in a size of 1 cm × 1 cm using a cutting apparatus to obtain a specimen having a size of 1 cm × 1 cm. The weight of this specimen is measured.

Next, the active material-containing layer is removed from the specimen. For example, the active material-containing layer can be removed by immersing the specimen in N-methylpyrrolidone. Any solvent may be used as the solvent for removing the active material-containing layer, as long as it does not erode the current collector and can remove the active material-containing layer. The thickness and weight of the current collector specimen remaining as the specimen are measured.

Next, the thickness of the current collector is subtracted from the thickness of the electrode to calculate the thickness of the active material-containing layer. Further, the weight of the current collector specimen is subtracted from the weight of the specimen having a size of 1 cm × 1 cm to calculate the weight of the active material-containing layer having a size of 1 cm × 1 cm. Then, the density (unit: g/cm$^3$) of the active material-containing layer can be calculated by dividing the weight of the active material-containing layer having a size of 1 cm × 1 cm by the thickness of the active material-containing layer.

<Measurement of True Specific Gravity>

The active material particles are isolated by the same procedures as those of the method described for the measurement of the particle size distribution of the active material particles. A specimen of the active material particles is put into a pycnometer, and the true density can be measured by a predetermined format. As the gas/solvent used for substitution in the pycnometer measurement, any gas/solvent that can sufficiently penetrate/permeate into the inside of the specimen can be used.

The electrode according to the first embodiment includes an active material-containing layer containing a lithium-nickel-cobalt-manganese composite oxide having an average primary particle diameter of 2 $\mu$m or more and 7 $\mu$m or less as an active material. In the active material-containing layer, a specific surface area $S_{BET}$ measured according to a $N_2$ gas adsorption method and a pore specific surface area $S_{Hg}$ measured according to a mercury intrusion method satisfy a relationship of $0.8 < S_{BET}/S_{Hg} < 2.0$. Further, the pore specific surface area $S_{Hg}$ measured according to the mercury intrusion method and a pore volume $V_{Hg}$ measured according to the mercury intrusion method satisfy a relationship of 20 m$^2$/mL $< S_{Hg}/V_{Hg} < 60$ m$^2$/mL. The electrode can realize a battery with excellent life performance, which is excellent in capacity retention ratio and has suppressed resistance increase.

(Second Embodiment)

According to a second embodiment, a battery is provided. The battery includes the electrode according to the first embodiment and an electrolyte. As described above, the electrode according to the first embodiment can realize a battery having excellent life performance. Therefore, the battery according to the second embodiment can have excellent life performance.

Such a battery may include a positive electrode and a negative electrode. The battery may include the electrode according to the first embodiment as the positive electrode.

The battery may further include a separator provided between the positive electrode and the negative electrode. The positive electrode, the negative electrode, and the separator may configure an electrode group. The electrolyte may be held in the electrode group.

The battery may further include a container member that houses the electrode group and the electrolyte.

The battery may further include a positive electrode terminal electrically connected to the positive electrode and a negative electrode terminal electrically connected to the negative electrode. Each electrode terminal may be connected to, for example, a current-collecting tab of the corresponding electrode. At least a part of the positive electrode terminal and at least a part of the negative electrode terminal may extend outside the container member.

The battery may be, for example, a lithium ion secondary battery. The battery also includes, for example, a nonaqueous electrolyte battery containing a nonaqueous electrolyte as the electrolyte.

Hereinafter, the positive electrode, negative electrode, electrolyte, separator, container member, positive electrode terminal, and negative electrode terminal will be described in detail.

(1) Positive electrode

The positive electrode includes a positive electrode current collector and a positive electrode active material-containing layer(s) (positive electrode mixture layer(s)) supported on one surface or both the obverse and reverse surfaces of the positive electrode current collector and containing a positive electrode active material, an electro-conductive agent, and a binder.

The positive electrode may be the electrode according to the first embodiment. In an aspect as the positive electrode, the positive electrode current collector, the positive electrode active material, and the positive electrode active material-containing layer of the positive electrode correspond respectively to the current collector, the active material, and the active material-containing layer of the electrode according to the first embodiment. Since the electrode according to the first embodiment has been described in detail above, the description of the positive electrode here is omitted.

(2) Negative electrode

The negative electrode includes a negative electrode current collector and a negative electrode active material-containing layer(s) (negative electrode mixture layer(s)) supported on one surface or both the obverse and reverse surfaces of the negative electrode current collector. The negative electrode active material-containing layer contains a negative electrode active material. The negative electrode active material-containing layer can further contain an electro-conductive agent and a binder, in addition to the negative electrode active material. The electro-conductive agent may be blended to improve current collection performance and to suppress the contact resistance between the negative electrode active material and the negative electrode current collector. The binder may be blended to bind the dispersed negative electrode active materials and to bind the negative electrode active material and the negative electrode current collector.

[Material]

Hereinafter, materials that can be used in the negative electrode active material-containing layer and the negative electrode current collector will be described.

<Negative Electrode Active Material-Containing Layer>

The blending proportions of the negative electrode active material, electro-conductive agent and binder in the negative electrode active material-containing layer are preferably within the ranges of 70% by mass to 96% by mass of the negative electrode active material, 2% by mass to 28% by mass of the electro-conductive agent, and 2% by mass to 28% by mass of the binder. With the amount of the electro-conductive agent being 2% by mass or more, the current collecting performance of the negative electrode active material-containing layer can be improved, and therefore, excellent large current performance and low temperature performance can be expected. With the amount of the binder being 2% by mass or more, binding between the negative electrode active material-containing layer and the current collector will be sufficient, and therefore, excellent cycle performance can be expected.

On the other hand, from the perspective of achieving high capacity, 28% by mass or less of each of the electro-conductive agent and binder are preferable.

<Negative Electrode Active Material>

The negative electrode preferably contains a negative electrode active material capable of having lithium ions inserted and extracted at a potential of 0.4 V (vs. Li/Li$^+$) or more. In the battery according to the second embodiment including such a negative electrode, precipitation of lithium due to charge and discharge can be suppressed. Therefore, such a battery is more excellent in rapid charge-discharge performance.

Examples of the negative electrode active material capable of having lithium ions inserted and extracted at a potential of 0.4 V (vs. Li/Li$^+$) or more include lithium titanate having a spinel crystal structure represented by $Li_{4+x}Ti_5O_{12}$ (x varies within a range of $-1 \leq x \leq 3$ according to charge-discharge reaction), $Li_{2+x}Ti_3O_7$ having a ramsdellite crystal structure (x varies within a range of $-1 \leq x \leq 3$ according to charge-discharge reaction), and a metal composite oxide containing Ti and at least one selected from the group consisting of P, V, Sn, Cu, Ni, and Fe. Examples of the metal composite oxide containing Ti and at least one selected from the group consisting of P, V, Sn, Cu, Ni, and Fe include $TiO_2-P_2O_5$, $TiO_2-V_2O_5$, $TiO_2-P_2O_5-SnO_2$, and $TiO_2-P_2O_5-MeO$ (Me is at least one element selected from the group consisting of Cu, Ni, and Fe). These metal composite oxides are transformed into lithium titanium composite oxides upon insertion of lithium through charging. Of the lithium titanium composite oxides, a spinel lithium titanate is excellent in cycle performance and preferable.

The negative electrode may contain another active material, and examples thereof include carbonaceous materials and metal compounds.

Examples of the carbonaceous material include natural graphite, artificial graphite, coke, vapor-grown carbon fibers, mesophase pitch-based carbon fibers, spherical carbon, and resin-fired carbon. More preferable examples of the carbonaceous material include vapor-grown carbon fibers, mesophase pitch-based carbon fibers, and spherical carbon. The carbonaceous material preferably has lattice spacing d002 between (002) planes of 0.34 nm or less according to X-ray diffraction.

As the metal compound, a metal sulfide, a metal nitride, or the like may be used. As the metal sulfide, for example, titanium sulfide such as $TiS_2$, for example, molybdenum sulfide such as $MoS_2$, for example, iron sulfides such as $FeS$, $FeS_2$, and $Li_yFeS_2$ ($0 \leq y \leq 2$) may be used. As the metal nitride, for example, lithium cobalt nitride (for example, $Li_sCo_tN$; $0 < s < 4$, $0 < t < 0.5$) may be used.

Other than the above lithium titanium composite oxides, lithium titanium composite oxides such as monoclinic niobium titanium composite oxides and orthorhombic titanium-containing composite oxides may be used for the negative electrode active material.

Examples of the monoclinic niobium titanium composite oxide include a compound represented by $Li_eTi_{1-f}M1_fNb_{2-g}M2_gO_{7+\delta}$. Here, M1 is at least one selected from the group consisting of Zr, Si, and Sn. M2 is at least one selected from the group consisting of V, Ta, and Bi. The respective subscripts in the composition formula are specified as follows: $0 \leq e \leq 5$, $0 \leq f < 1$, $0 \leq g < 2$, and $-0.3 \leq \delta \leq 0.3$. Specific examples of the monoclinic niobium titanium composite oxide include $Li_eNb_2TiO_7$ ($0 \leq e \leq 5$).

Another example of the monoclinic niobium titanium oxide is a compound represented by $Li_eTi_{1-f}M3_{f+g}Nb_{2-g}O_{7-\delta}$. Here, M3 is at least one selected from the group consisting of Mg, Fe, Ni, Co, W, Ta, and Mo. The respective subscripts in the composition formula are specified as follows: $0 \leq e < 5$, $0 \leq f < 1$, $0 \leq g < 2$, and $-0.3 \leq \delta \leq 0.3$.

Examples of the orthorhombic titanium-containing composite oxide include a compound represented by $Li_{2+h}M4_{2-i}Ti_{6-j}M5_kO_{14+\sigma}$. Here, M4 is at least one selected from the group consisting of Sr, Ba, Ca, Mg, Na, Cs, Rb and K. M5 is at least one selected from the group consisting of Zr, Sn, V, Nb, Ta, Mo, W, Y, Fe, Co, Cr, Mn, Ni and Al. The respective subscripts in the composition formula are specified as follows: $0 \leq h \leq 6$, $0 \leq i < 2$, $0 \leq j < 6$, $0 \leq k < 6$, and $-0.5 \leq \sigma \leq 0.5$. Specific examples of the orthorhombic titanium-containing composite oxide include $Li_{2+h}Na_2Ti_6O_{14}$ ($0 \leq k \leq 6$).

One of the above active materials may be contained in the negative electrode as the negative electrode active material, or two or more thereof may be contained in the negative electrode as the negative electrode active materials.

<Electro-conductive Agent>

Examples of the electro-conductive agent include carbonaceous materials such as acetylene black, carbon black, graphite, carbon nanofibers, and carbon nanotubes. These carbonaceous materials may be used alone, or a plurality of the carbonaceous substances may be used.

<Binder>

Examples of the binder include polytetrafluoroethylene (PTFE), polyvinylidene fluoride (PVdF), fluororubbers, and styrene-butadiene rubber (SBR). In addition, carboxymethyl cellulose (CMC), polyimide, polyamide, and the like may be used as the binder. These binders may be used alone, or a plurality of the binders may be used.

<Negative Electrode Current Collector>

As the negative electrode current collector, a material that is electrochemically stable at a potential at which the lithium ion insertion-extraction reaction of the negative electrode active material occurs can be used. The negative electrode current collector is preferably a metal foil made of at least one selected from copper, nickel, stainless steel, and aluminum, or an aluminum alloy foil containing at least one selected from the group consisting of Mg, Ti, Zn, Mn, Fe, Cu, and Si.

As the shape of the negative electrode current collector, various shapes can be adopted according to the application of the battery using the negative electrode.

The negative electrode current collector may include a portion that does not support the negative electrode active material-containing layer on the surfaces thereof. This portion can serve as a negative electrode current-collecting tab. Alternatively, the negative electrode may include a current-collecting tab separate from the negative electrode current collector.

<Production Method>

The negative electrode can be produced by, for example, the following method.

First, the negative electrode active material, the binder, and optionally the electro-conductive agent are suspended in an appropriate solvent to prepare a slurry for producing a negative electrode. As the solvent, for example, a generally used solvent such as N-methylpyrrolidone is used. The obtained slurry is applied onto the negative electrode current collector. The applied slurry is dried and pressed, whereby a negative electrode including a negative electrode current collector and negative electrode active material-containing layer (s) formed on the negative electrode current collector can be obtained. Otherwise, the negative electrode active material, the binder, and optionally the electro-conductive agent may be formed into pellets, and the pellets may be used as the negative electrode active material-containing layer.

(3) Separator

As the separator, a material having an electrically insulating property is used. The separator is not particularly limited as long as it has an insulating property, and may be, for example, a porous film or nonwoven fabric made of a polymer such as polyolefin, cellulose, polyethylene terephthalate, or vinylon. The materials for the separator may be used alone, or two or more thereof may be used in combination.

(4) Electrolyte

Examples of the electrolyte include a liquid nonaqueous electrolyte prepared by dissolving an electrolyte salt (solute) in a nonaqueous solvent, a gel nonaqueous electrolyte which is a composite between the liquid nonaqueous electrolyte and a polymeric material, and the like.

Examples of the electrolyte salt include lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium hexalithium antimonate ($LiSbF_6$), lithium difluoro phosphate ($LiPO_2F_2$), lithium trifluoromethanesulfonate ($LiCF_3SO_3$; a.k.a., LiTFS), lithium bistrifluoromethane sulfonylamide ($Li(CF_3SO_2)_2N$; a.k.a., LiTFSI), lithium bispentafluoroethane sulfonylamide {$Li(C_2F_5SO_2)_2N$; a.k.a., LiBETI}, lithium bisoxalatoborate {$LiB(C_2O_4)_2$; a.k.a., LiBOB}, and lithium difluoro (trifluoro-2-oxido-2-trifluoro-methylpropionate (2-)-0,0) phosphate {$LiBF_2OCOOC(CF_3)_2$, a.k.a.; $LiBF_2$(HHIB)}. These electrolyte salts may be used singularly, or alternatively, two or more may be mixed and used. Among them, $LiPF_6$ and $LiBF_4$ are particularly preferable.

The electrolyte salt is preferably dissolved within a range of 1 mol/L or more to 3 mol/L or more with respect to the nonaqueous solvent. With an electrolyte salt concentration within this range, performance in a case of flowing a current of high load can be further improved, while suppressing effects of viscosity increase due to raising the electrolyte salt concentration.

The nonaqueous solvent may be an organic solvent, for example, cyclic carbonates such as ethylene carbonate (EC), propylene carbonate (PC), and vinylene carbonate (VC) ; linear carbonates such as dimethyl carbonate (DMC), ethyl methyl carbonate (EMC), diethyl carbonate (DEC), and dipropyl carbonate (DPC); cyclic ethers such as tetrahydrofuran (THF) and 2-methyl tetrahydrofuran (2-MeTHF) ; linear ethers such as 1,2-dimethoxy ethane (1,2-DME); cyclic esters such as γ-butyrolactone (BL); cyclic esters such as methyl acetate, ethyl acetate, methyl propionate, and ethyl propionate; 1,3-dioxolane; acetonitrile (AN); and sulfolane (SL). These organic solvents may be used singularly or in a form of a mixture of two or more thereof. An organic solvent including a cyclic carbonate and/or a linear carbonate is preferably used.

Examples of the polymeric material used for the gel nonaqueous electrolyte include polyvinylidene fluoride (PVdF), polyacrylonitrile (PAN), polyethylene oxide (PEO), and the like.

(5) Container Member

The container member may be formed from a laminate film or configured of a container made of a metal. A container made of resin such as polyolefin resin, polyvinyl chloride resin, polystyrene-based resin, acrylic resin, phenol resin, polyphenylene-based resin, and fluorine-based resin may also be used for the container member. When a metal container is used, the lid and container may be a single entity or separate components. A wall thickness of the metal container is desirably 3 mm or less, and more preferably 0.5 mm or less.

Examples of the shape of the container member include a flat shape (thin shape), a prismatic shape, a cylindrical shape, a coin shape, a button shape, a sheet shape, a stacked shape, and the like. The container member may be one for a small-sized battery installed in a portable electronic device and the like, and may also be a container member for a large-sized battery installed on a two-wheeled to four-wheeled automobile.

A wall thickness of the container member made of laminate film is desirably 0.5 mm or less. Examples of the laminate film include a multilayer film including resin layers and a metal layer disposed between the resin layers. The metal layer is preferably made of an aluminum foil or an aluminum alloy foil for the sake of weight reduction. For the resin layers, for example, a film made of a polymer material such as polypropylene (PP), polyethylene (PE), nylon, or polyethylene terephthalate (PET) may be used. The laminate film may be molded into the shape of the container member by thermal sealing.

The metal container is made of aluminum, an aluminum alloy, or the like. The aluminum alloy preferably contains an element such as magnesium, zinc, or silicon. When the alloy contains a transition metal such as iron, copper, nickel, and chromium, the content thereof is preferably 100 ppm or less.

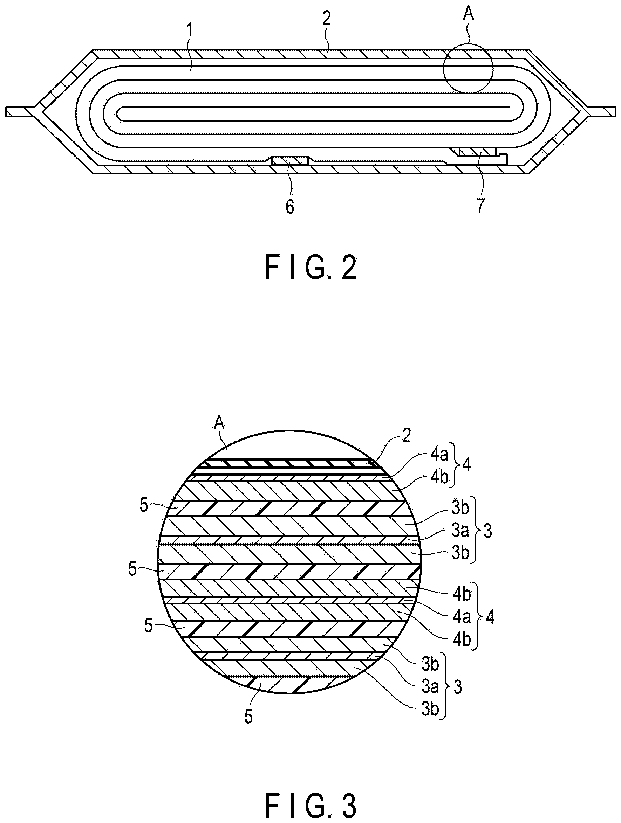

An example of the battery will be described with reference to FIG. 2 and FIG. 3. A flat battery shown in FIG. 2 is provided with a flat shaped wound electrode group 1, a container member 2, a positive electrode terminal 7, a negative electrode terminal 6, and an electrolyte (not shown) . The container member 2 is a bag-form container member made of laminate film. The wound electrode group 1 is housed in the container member 2. As shown in FIG. 3, the wound electrode group 1 includes a positive electrode 3, a negative electrode 4 and a separator 5, and is formed by having a stack, with stacking in the order of the negative electrode 4, separator 5, positive electrode 3 and separator 5 from the outside, be spirally wound and subjected to press molding.

The positive electrode 3 includes a positive electrode current collector 3a and positive electrode active material-containing layers 3b. The positive electrode active material-containing layers 3b contain a positive electrode active material. A positive electrode active material-containing layer 3b is formed on both faces of the positive electrode current collector 3a. The negative electrode 4 includes a negative electrode current collector 4a and negative electrode active material-containing layers 4b. The negative electrode active material containing layers 4b contain a negative electrode active material. Among the negative electrode 4, at the portion positioned outermost, a negative electrode active material containing layer 4b is formed only on one face on the inner surface side of the negative electrode current collector 4a. At the other portions of the negative electrode 4, a negative electrode active material containing layer 4b is formed on both faces of the negative electrode current collector 4a.

As shown in FIG. 2, the positive electrode terminal 7 is connected to the positive electrode 3 in vicinity of the outer peripheral end of the wound electrode group 1. The negative electrode terminal 6 is connected to the negative electrode 4 at the outermost portion. The positive electrode terminal 7 and the negative electrode terminal 6 are extended to the outside through an opening of the container member 2.

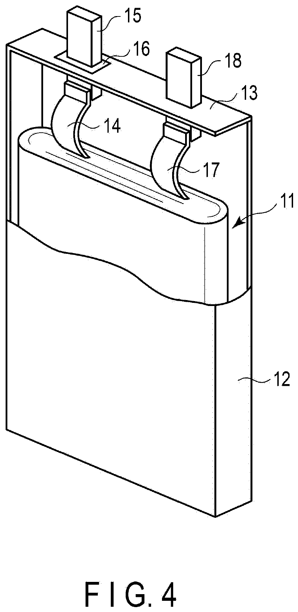

The battery is not limited to one having the configuration shown in FIG. 2 and FIG. 3 described above, but may be of a configuration shown in FIG. 4, for example.

In a prismatic battery shown in FIG. 4, a wound electrode group 11 is housed in a bottomed rectangular tubular container 12 made of metal as the container member. A rectangular lid 13 is welded to the opening of the container 12. The flat wound electrode group 11 may have, for example, a configuration similar to the wound electrode group 1 described with reference to FIG. 2 and FIG. 3.

One end of a negative electrode tab 14 is electrically connected to the negative electrode current collector and the other end thereof is electrically connected to a negative electrode terminal 15. The negative electrode terminal 15 is fixed to the rectangular lid 13 by a hermetic seal with a glass material 16 interposed. One end of a positive electrode tab 17 is electrically connected to the positive electrode current collector and the other end is electrically connected to a positive electrode terminal 18 fixed to the rectangular lid 13 .

The negative electrode tab 14 is made of a material such as aluminum or an aluminum alloy containing elements such as Mg, Ti, Zn, Mn, Fe, Cu, Si, and the like. The negative electrode tab 14 is preferably formed of the same material as that of the negative electrode current collector, so as to reduce the contact resistance with the negative electrode current collector.

The positive electrode tab 17 is made of a material such as aluminum or an aluminum alloy containing elements such as Mg, Ti, Zn, Mn, Fe, Cu, Si, and the like. The positive electrode tab 17 is preferably formed of the same material as that of the positive electrode current collector, so as to reduce the contact resistance with the positive electrode current collector.

In the illustrated battery, the wound electrode group in which the separator is wound together with the positive electrode and the negative electrode has been used, but there may be used a stacked electrode group in which positive electrodes and negative electrodes are alternately stacked with the separator(s) interposed therebetween.

The battery according to the second embodiment includes the battery according to the first embodiment. Therefore, the battery is excellent in capacity retention ratio and its resistance increase is suppressed, and thus, the battery exhibits excellent life performance.

(Third Embodiment)

According to a third embodiment, a battery pack is provided. The battery pack includes the battery according to the second embodiment.

The battery pack according to the third embodiment may include one or plural of the battery (single-battery) according to the second embodiment described above. The plural batteries that may be included in the battery pack may be electrically connected in series or in parallel to configure a battery module. The battery pack may include plural battery modules.

Next, an example of a battery pack according to the third embodiment will be described with reference to the drawings.

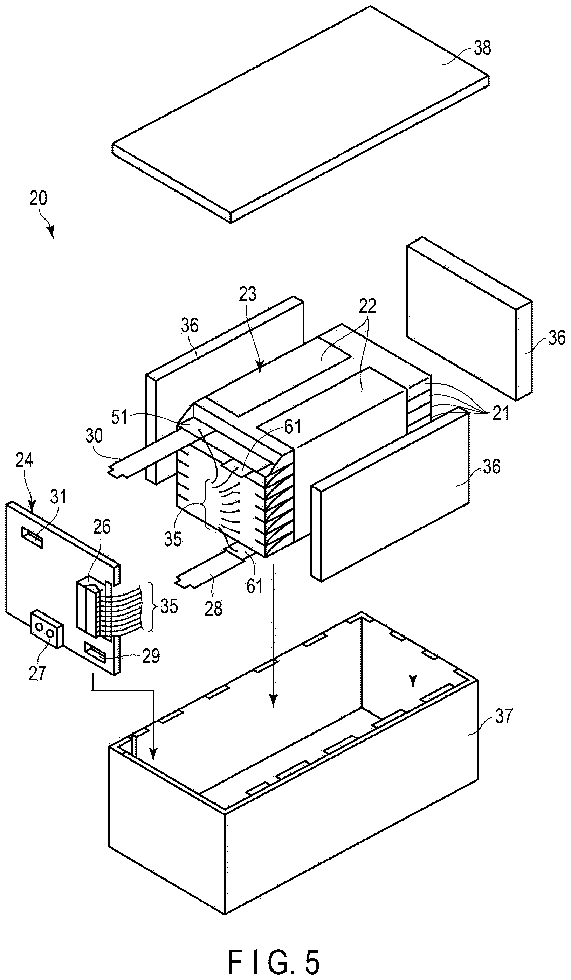

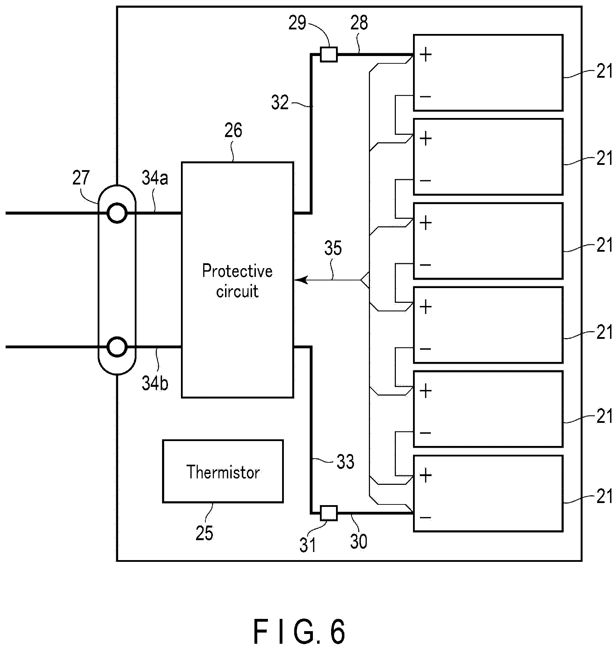

FIG. 5 is an exploded perspective view of an example of the battery pack according to the second embodiment. FIG. 6 is a block diagram showing an electric circuit of the battery pack shown in FIG. 6.

The battery pack 20 shown in FIG. 5 and FIG. 6 includes plural single-batteries 21. The single-battery 21 may be the exemplar flat battery according to the second embodiment described with reference to FIG. 4.

The plural single-batteries 21 are stacked so that negative electrode terminals 51 and positive electrode terminals 61 extending outside are aligned in the same direction and are fastened with an adhesive tape 22 to configure a battery module 23. These single-batteries 21 are electrically connected in series with each other as shown in FIG. 6.

A printed wiring board 24 is disposed facing the side surface from which the negative electrode terminals 51 and the positive electrode terminals 61 of the single-batteries 21 extend. As shown in FIG. 6, the printed wiring board 24 is installed with a thermistor 25, a protective circuit 26, and an energizing terminal 27 to external equipment. Note that an insulating plate (not shown) is attached to the surface of the printed wiring board 24 which faces the battery module 23 so as to avoid unnecessary connection with the wiring of the battery module 23.

A positive electrode side lead 28 is connected to the positive electrode terminal 61 located lowermost in the battery module 23, and its tip is inserted into a positive electrode side connector 29 of the printed wiring board 24 and electrically connected thereto. A negative electrode side lead 30 is connected to the negative electrode terminal 51 located uppermost in the battery module 23, and its tip is inserted into the negative electrode side connector 31 of the printed wiring board 24 and electrically connected thereto. These connectors 29 and 31 are connected to the protective circuit 26 through wiring 32 and the wiring 33 formed on the printed wiring board 24.

The thermistor 25 detects the temperature of the single-batteries 21, and the detection signal is transmitted to the protective circuit 26. The protective circuit 26 can shut off a plus-side wiring 34a and a minus-side wiring 34b between the protective circuit 26 and the energizing terminal 27 to external equipment in accordance to a predetermined condition. An example of the predetermined condition is, for example, when the temperature detected by the thermistor 25 becomes a predetermined temperature or higher. Another example of the predetermined condition is, for example, when overcharge, over-discharge, overcurrent, or the like of the single-battery 21 is detected. Detection of the overcharge or the like is performed for each of the individual single-batteries 21 or the entire battery module 23. In the case of detecting each single-battery 21, a battery voltage may be detected, or a positive electrode potential or a negative electrode potential may be detected. In the latter case, a lithium electrode used as a reference electrode is inserted into each single-battery 21. In the case of the battery pack 20 of FIG. 5 and FIG. 6, wiring 35 for voltage detection is connected to each of the single-batteries 21. Detection signals are transmitted to the protective circuit 26 through the wiring 35.

Protective sheets 36 made of rubber or resin are respectively arranged on three side surfaces of the battery module 23 excluding the side surface from which the positive electrode terminal 61 and the negative electrode terminal 51 protrude.

The battery module 23 is housed in a housing container 37 together with each protective sheet 36 and the printed wiring board 24. That is, the protective sheets 36 are disposed in the housing container 37 respectively on both inner side surfaces in a long-side direction and the inner side surface in a short-side direction, and the printed wiring board 24 is disposed on the inner side surface at the opposite side in the short-side direction. The battery module 23 is located in a space surrounded by the protective sheets 36 and the printed wiring board 24. A lid 38 is attached to the upper surface of the housing container 37.

For fixing the battery module 23, a thermal shrinkage tape may be used in place of an adhesive tape 22. In this case, after the protective sheets are disposed on each side surface of the battery module and a thermal shrinkage tape is wound, the thermal shrinkage tape is thermally shrunk, to bind the battery module.

In FIG. 5 and FIG. 6, the single-batteries 21 are connected in series, but the single-batteries 21 may be connected in parallel in order to increase the battery capacity. Further, assembled battery packs may also be connected in series and/or parallel.

The mode of the battery pack is appropriately changed depending on the application. A preferable application of the battery pack is one where good cycle performance is desired when a large current is extracted. Specific examples of the applications include that for a power source of a digital camera, and for use in a vehicle such as a two-wheeled to four-wheeled hybrid electric automobile, a two-wheeled to four-wheeled electric automobile, and a power-assisted bicycle. The battery pack is particularly favorably used for onboard use.

The battery pack according to the third embodiment includes the battery according to the second embodiment. Therefore, the battery pack is excellent in capacity retention ratio and its resistance increase is suppressed, and thus, the battery pack exhibits excellent life performance.

[EXAMPLES]

The present invention will be described in more detail with reference to examples described below, but the invention is not limited to the examples listed below, as long as the spirit of the invention is not exceeded.

(Example 1)

[Production of Positive Electrode]

A lithium-nickel-cobalt-manganese composite oxide $LiNi_{0.8}Co_{0.1}Mn_{0.1}O_2$ having an average primary particle diameter of 3.7 um as the positive electrode active material, acetylene black as the electro-conductive agent, and polyvinylidene fluoride (PVdF) as the binder were prepared. The prepared materials were suspended in N-methylpyrrolidone to obtain a slurry for producing a positive electrode. The mass ratios of the positive electrode active material, electro-conductive agent, and binder put into N-methylpyrrolidone were 100 parts by mass, 5 parts by mass, and 10 parts by mass, respectively. For the dispersion of the slurry for producing the positive electrode, a horizontal bead mill (RMH-03 manufactured by Imex Co., Ltd.) was used, using zirconia beads 2 mm $\phi$ as the beads and with the bead filling rate set to 80%, the disk rotation speed to 800 rpm, and the flow rate to 200 $cm^3$/min. The obtained slurry was applied onto both surfaces of an aluminum foil (current collector) having a band shape and a thickness of 12 um, then dried. By performing a pressing process, a positive electrode having an active material-containing layer with a density of 3.31 $g/cm^3$, a pore volume $V_{Hg}$ according to the mercury intrusion method of 0.06 mL/g, a pore specific surface area $S_{Hg}$ according to the mercury intrusion method of 2.8 $m^2$/g, and a pore specific surface area $S_{BET}$ according to the $N_2$ adsorption method (BET method) of 2.6 $m^2$/g was produced.

[Production of Negative Electrode]

Spinel lithium titanate $Li_4Ti_5O_{12}$ as the negative electrode active material, graphite as the electro-conductive agent, and PVdF as the binder were prepared. The prepared materials were suspended in N-methylpyrrolidone to obtain a slurry for producing a negative electrode. The mass ratios of the negative electrode active material, electro-conductive agent, and binder put into N-methylpyrrolidone were 95 mass%, 2.5 mass%, and 2.5 mass%, respectively. The prepared slurry for producing the negative electrode was applied onto both surfaces of an aluminum foil (current collector) having a band shape and a thickness of 12 $\mu$m, then dried. Thereafter, by performing a pressing process, a negative electrode was produced.

[Production of Electrode Group]

The positive electrode and the negative electrode produced as described above were stacked with a separator interposed therebetween. As the separator, a separator made of cellulose and having a thickness of 14 um and a width of 85 mm was used. The obtained stack was wound, taking an axis extending in the short side direction of the positive electrode current collector and the negative electrode current collector as the center. The positive electrode, negative electrode, and separator wound as described above were subjected to a heat press at 80°C and fixed with an insulating tape. Thus, a wound electrode group including the positive electrode, the negative electrode, and the separator positioned between the positive electrode and the negative electrode was obtained.

[Preparation of Nonaqueous Electrolyte]

Propylene carbonate (PC) and diethyl carbonate (DEC) were mixed at a volume ratio of 1:1, thereby preparing a nonaqueous solvent. Lithium hexafluorophosphate $LiPF_6$ was dissolved in the obtained nonaqueous solvent at a concentration of 1.0 mol/L, thereby preparing a nonaqueous electrolyte.

[Assembly of Battery]

The electrode group formed into a flat shape that had been obtained as explained above was inserted into a metal can formed of an aluminum plate having a plate thickness of 0.5 mm. The opening of the metal can was sealed with a sealing plate, to thereby house the electrode group in the metal can as the container member. The nonaqueous electrolyte prepared as described above was poured into the container through an electrolytic solution inlet provided on the sealing plate. Next, a sealing lid was welded to the periphery of the electrolytic solution inlet, thereby preparing a flat nonaqueous electrolyte battery.

(Examples 2 to 6 and Comparative Examples 1 to 8)

In Examples 2 to 6 and Comparative Examples 1 to 8, batteries were produced in the same manner as in Example 1 except that the positive electrode active material was changed from that in Example 1 as shown in Table 1, and that the dispersion conditions of the slurry for producing the positive electrode and the press load for the active material-containing layer were adjusted so that the design of the positive electrode active material-containing layer was changed to that as shown in Table 2. As the design of the positive electrode active material-containing layer, the pore volume $V_{Hg}$ according to the mercury intrusion method, the pore specific surface area $S_{Hg}$ according to the mercury intrusion method, the specific surface area $S_{BET}$ according to the $N_2$ gas adsorption method (BET method), the electrode density, and the particle size distribution were adjusted as shown in Table 2.

Table 1 below summarizes the details of the positive electrode active materials in each of the Examples and Comparative Examples. As details of the positive electrode active material, the composition of the active material, the average primary particle diameter of the active material particles, the BET specific surface area of the active material particles alone, and the true specific gravity of the active material are shown.

Table 2 below summarizes the designs of the positive electrode active material-containing layers in each of the Examples and Comparative Examples. Shown as the designs of the active material-containing layers, the pore volume $V_{Hg}$ and pore specific surface area $S_{Hg}$ measured by the mercury intrusion method described above, the specific surface area $S_{BET}$ measured by the $N_2$ gas adsorption method (BET method) described above, the electrode density measured by the method described above (the density of the active material-containing layer excluding the current collector), and the particle diameter $D_{50}$ and the ratio $D_{90}/D_{10}$ of the particle diameter $D_{90}$ to the particle diameter $D_{10}$ in the particle size distribution measured by the laser diffraction scattering method described above.

[Table 1]

| [Table 1] | Positive electrode active material | | | |
|---|---|---|---|---|
| | Active material composition | Average primary particle diameter [$\mu$m] | BET specific surface area [$m^2$/g] | True specific gravity [g/$cm^3$] |
| Example 1 | $LiNi_{0.8}Co_{0.1}Mn_{0.1}O_2$ | 3.7 | 0.7 | 4.78 |
| Example 2 | $LiNi_{0.8}Co_{0.1}Mn_{0.1}O_2$ | 3.7 | 0.7 | 4.78 |
| Example 3 | $LiNi_{0.8}Co_{0.1}Mn_{0.1}O_2$ | 3.7 | 0.7 | 4.78 |
| Example 4 | $LiNi_{0.8}Co_{0.1}Mn_{0.1}O_2$ | 3.7 | 0.7 | 4.78 |
| Example 5 | $LiNi_{0.8}Co_{0.1}Mn_{0.1}O_2$ | 3.7 | 0.7 | 4.78 |
| Example 6 | $LiNi_{0.5}Co_{0.2}Mn_{0.3}O_2$ | 6.2 | 0.5 | 4.60 |
| Comparative Example 1 | $LiNi_{0.8}Co_{0.1}Mn_{0.1}O_2$ | 12.2 | 1.6 | 4.70 |
| Comparative Example 2 | $LiNi_{0.8}Co_{0.1}Mn_{0.1}O_2$ | 5.4 | 0.9 | 4.64 |
| Comparative Example 3 | $LiNi_{0.8}Co_{0.1}Mn_{0.1}O_2$ | 11.8 | 1.6 | 4.70 |
| Comparative Example 4 | $LiNi_{0.8}Co_{0.1}Mn_{0.1}O_2$ | 11.8 | 1.6 | 4.70 |
| Comparative Example 5 | $LiNi_{0.8}Co_{0.1}Mn_{0.1}O_2$ | 12.2 | 1.6 | 4.70 |
| Comparative Example 6 | $LiNi_{0.8}Co_{0.1}Mn_{0.1}O_2$ | 4.3 | 1.1 | 4.64 |
| Comparative Example 7 | $LiNi_{0.8}Co_{0.1}Mn_{0.1}O_2$ | 5.0 | 1.0 | 4.64 |
| Comparative Example 8 | $LiNi_{0.8}Co_{0.1}Mn_{0.1}O_2$ | 12.2 | 1.6 | 4.70 |

[Table 2]

| [Table 2] | Positive electrode active material-containing layer | | | | | | | |
|---|---|---|---|---|---|---|---|---|
| | $V_{Hg}$ [mL/g] | $S_{Hg}$ [$m^2$/g] | $S_{BET}$ [$m^2$/g] | $S_{BET}/S_{Hg}$ | $S_{Hg}/V_{Hg}$ [$m^2$/mL] | Electrode density [g/$cm^3$] | $D_{50}$ [$\mu m^3$] | $D_{90}/D_{10}$ |
| Example 1 | 0.06 | 2.8 | 2.6 | 0.9 | 43.8 | 3.31 | 3.7 | 2.82 |
| Example 2 | 0.07 | 2.9 | 2.5 | 0.9 | 40.3 | 3.20 | 3.7 | 2.82 |

(continued)

| [Table 2] | Positive electrode active material-containing layer | | | | | | | |
|---|---|---|---|---|---|---|---|---|
| | $V_{Hg}$ [mL/g] | $S_{Hg}$ [m²/g] | $S_{BET}$ [m²/g] | $S_{BET}/S_{Hg}$ | $S_{Hg}/V_{Hg}$ [m²/mL] | Electrode density [g/cm³] | $D_{50}$ [μm³] | $D_{90}/D_{10}$ |
| Example 3 | 0.06 | 2.9 | 2.5 | 0.9 | 49.4 | 3.37 | 3.7 | 2.82 |
| Example 4 | 0.08 | 2.8 | 2.6 | 0.9 | 37.3 | 3.16 | 3.7 | 2.82 |
| Example 5 | 0.05 | 2.9 | 2.8 | 1.0 | 53.9 | 3.46 | 3.7 | 2.82 |
| Example 6 | 0.09 | 2.9 | 2.7 | 0.9 | 30.9 | 3.20 | 6.2 | 1.85 |
| Comparative Example 1 | 0.10 | 2.4 | 3.0 | 1.2 | 25.0 | 3.10 | 12.2 | 4.77 |
| Comparative Example 2 | 0.10 | 3.4 | 2.9 | 0.8 | 34.3 | 3.10 | 5.4 | 2.03 |
| Comparative Example 3 | 0.10 | 2.7 | 3.03 | 0.9 | 27.0 | 2.90 | 11.8 | 4.46 |
| Comparative Example 4 | 0.05 | 3.2 | 3.33 | 1.0 | 64.9 | 3.60 | 11.8 | 4.46 |
| Comparative Example 5 | 0.16 | 1.485 | 2.97 | 2.0 | 8.9 | 2.08 | 12.2 | 4.77 |
| Comparative Example 6 | 0.04 | 4.83 | 2.3 | 0.5 | 126 | 3.50 | 4.3 | 2.43 |
| Comparative Example 7 | 0.06 | 2.9 | 3.7 | 0.8 | 60.6 | 3.30 | 5.0 | 2.38 |
| Comparative Example 8 | 0.11 | 2.1 | 2.1 | 1.0 | 19.9 | 2.94 | 12.2 | 4.77 |

[Cycling test]

For each of the produced batteries, a cycling test was performed as follows.

First, the battery was charged in a 25°C environment, and adjusted to a state of charge (SOC) of 50%. Subsequently, after waiting for 1 hour, the OCV (open circuit voltage) at that time was recorded. Thereafter, the battery was discharged at a current value of 10 C, and a voltage drop at that time was measured. The value of the OCV was subtracted from the value of the voltage drop at 10 C discharge, and the obtained value was divided by the current value of 10 C, thereby obtaining a discharge resistance value (unit: mQ) of the battery.

Then, 600 cycles where, in a 45°C environment, the battery was charged at 2 C rate up to a state of charge (SOC) of 100% and discharged at 2 C rate down to a SOC of 0% were performed. The discharge capacities were measured at the time of discharge at the first cycle and the 600th cycle.

After carrying out the discharge at the 600th cycle, the discharge resistance value of the battery was measured again.

From the discharge capacities for the first cycle and the 600th cycle, the capacity retention ratio was calculated using the following equation: capacity retention ratio (unit: %) = [discharge capacity at 600th cycle / discharge capacity at first cycle] × 100%. From the discharge resistance values before and after carrying out 600 cycles of charge and discharge, the resistance increase ratio was calculated using the following formula: resistance increase ratio (unit: %) = [discharge resistance value after carrying out cycles / discharge resistance value before carrying out cycles] × 100%. The calculated results are shown in Table 3 below.

[Table 3]

| [Table 3] | Capacity retention ratio [%] | Resistance increase [%] |
|---|---|---|
| Example 1 | 100 | 5 |
| Example 2 | 100 | 8 |
| Example 3 | 100 | 0 |
| Example 4 | 100 | 17 |
| Example 5 | 99.4 | -1 |
| Example 6 | 99.8 | 20 |
| Comparative Example 1 | 97.5 | 17 |
| Comparative Example 2 | 93.5 | 40 |

(continued)

| [Table 3] | Capacity retention ratio [%] | Resistance increase [%] |
|---|---|---|
| Comparative Example 3 | 92.7 | 29 |
| Comparative Example 4 | 88.7 | 27 |
| Comparative Example 5 | 96.8 | 42 |
| Comparative Example 6 | 86.4 | 19 |
| Comparative Example 7 | 89.1 | 23 |
| Comparative Example 8 | 92.7 | 22 |

From Table 3, it can be seen that the batteries produced in Examples 1 to 6 achieve both excellent capacity retention ratio and suppression of resistance increase. On the other hand, it can be seen that the batteries of Comparative Examples 1 to 8 are inferior to those of Examples 1 to 6 in either one or both of the capacity retention ratio and the suppression of resistance increase. This is because, in Examples 1 to 6, the positive electrode active material-containing layer contained the lithium-nickel-cobalt-manganese composite oxide having the primary particle diameter of 2 $\mu$m or more and 7 $\mu$m or less as the positive electrode active material, and satisfied the above-described pore specific surface area and pore volume ratios of $0.8 < S_{BET}/S_{Hg} < 2.0$ and $20\ m^2/mL < S_{Hg}/V_{Hg} < 60\ m^2/mL$, whereby the permeability of the electrolytic solution into the positive electrode active material-containing layer and the electrode reaction area had been be appropriately controlled.

Among the batteries of Examples 1 to 6, the batteries of Examples 1 to 3 were particularly excellent in both capacity retention ratio and suppression of resistance increase. According to Examples 1 to 3, it can be seen that, when the ratio $S_{Hg}/V_{Hg}$ representing the relationship between the pore specific surface area and the pore volume according to the mercury intrusion method is within the range of $40\ m^2/mL < S_{Hg}/V_{Hg} < 50\ m^2/mL$, a battery more excellent in the perspective of capacity retention ratio and resistance increase is obtained.

On the other hand, the batteries of Comparative Examples 1 to 8 had not satisfied at least one of the above conditions in the positive electrode active material, and were inferior to those of Examples 1 to 6 in either one or both of the capacity retention ratio and the suppression of resistance increase. That is, the batteries of Comparative Examples 1 to 8 had not achieved the result of being excellent in both capacity retention ratio and suppression of resistance increase, since the electrode reaction area in the positive electrode active material-containing layer was too large, so that many side reactions occurred and many resistance components were formed, or since non-uniform distribution was generated in the electrode reaction due to the electrolytic solution poorly permeating, or not uniformly permeating, into the positive electrode active material-containing layer.

Specifically, in Comparative Example 1, the average primary particle diameter of the positive electrode active material was larger than 7 um. In Comparative Example 1, the capacity retention ratio was lower than those in Examples 1 to 6. In an electrode in which the particle diameter of the active material is large, unevenness is likely to occur in the distribution of lithium in the active material particles, and the distribution of the electrode reaction becomes uneven. It can be seen that the active material is hence deteriorated, resulting in the deterioration in capacity retention ratio during cycles.

In Comparative Example 2, the ratio between $S_{BET}$ and $S_{Hg}$ was 0.8. In Comparative Example 2, $S_{Hg}$ was larger than $S_{BET}$ and they did not satisfy the relationship of $0.8 < S_{BET}/S_{Hg} < 2.0$, and thus the capacity retention ratio was worse and the resistance increase was larger than those in Examples 1 to 6. In an electrode in which the $S_{Hg}$ is remarkably larger, the number of rough pores increases, and thereby, the distribution of the reaction becomes uneven among the entire electrode and the electrode area in which side reactions occur also increases. It can be seen that the deterioration in active material and the increase in side reactions hence occur, resulting in both the deterioration in capacity retention ratio during cycles and the resistance increase.

In Comparative Example 3, the average primary particle diameter of the positive electrode active material was larger than 7 $\mu$m, as in Comparative Example 1. In Comparative Example 3, the capacity retention ratio was further worse than that in Comparative Example 1, and the resistance increase was greater, as well. In Comparative Example 3, both $S_{Hg}$ and $S_{BET}$ were larger than those in Comparative Example 1. It can be seen that, since the pore specific surface area in the electrode is large as a whole and so the electrode area where side reactions occur also increased, making the deterioration in active material and the increase in side reactions occur, resulting in both the deterioration in capacity retention ratio during cycles and the resistance increase.

In Comparative Example 4, the average primary particle diameter of the positive electrode active material was larger than 7 $\mu$m, as in Comparative Examples 1 and 3. In Comparative Example 4, the ratio $S_{Hg}/V_{Hg}$ between $S_{Hg}$ and $V_{Hg}$ was more than $60\ m^2/mL$. It can be seen that the capacity retention ratio in Comparative Example 4 is worse than that in Comparative Example 3. That is, it can be seen that, even with a single-crystal active material having a uniform surface in which the specific surface area $S_{BET}$ as measured by the $N_2$ gas adsorption method and the pore specific surface area $S_{Hg}$ as measured by the mercury intrusion method are equivalent, when the specific surface area $S_{Hg}$ with respect to the pore volume $V_{Hg}$ is 60 $m^2$/mL or more, the permeability of the electrolytic solution is poor, thereby causing local deterioration in active material and deterioration in capacity retention ratio.

In Comparative Example 5, as well, the average primary particle diameter of the positive electrode active material was larger than 7 um, as in Comparative Examples 1, 3 and 4. In Comparative Example 5, the ratio between $S_{BET}$ and $S_{Hg}$ was 2.0. Further, the ratio $S_{Hg}/V_{Hg}$ between $S_{Hg}$ and $V_{Hg}$ was less than 20 $m^2$/mL. In Comparative Example 5, the resistance increase is significantly larger than that in Comparative Example 1. That is, it can be seen that $S_{Hg}$ was small and that neither of the relationships of $0.8 < S_{BET}/S_{Hg} < 2.0$ and $20\,m^2$/mL $< S_{Hg}/V_{Hg} < 60\,m^2$/mL was satisfied, resulting in a large resistance increase.

In Comparative Example 6, the ratio between $S_{BET}$ and $S_{Hg}$ was 0.5, and the ratio $S_{Hg}/V_{Hg}$ between $S_{Hg}$ and $V_{Hg}$ significantly exceeded 60 $m^2$/mL. In Comparative Example 7, the ratio between $S_{BET}$ and $S_{Hg}$ was 0.8, and the ratio $S_{Hg}/V_{Hg}$ between $S_{Hg}$ and $V_{Hg}$ was more than 60.6 $m^2$/mL. In Comparative Example 6, the capacity retention ratio was particularly low, even amongst those in Comparative Examples 1 to 8. In Comparative Example 7, the capacity retention ratio was the second lowest following that in Comparative Example 4. That is, it was confirmed also in Comparative Examples 6 and 7, that the capacity retention ratio was deteriorated when the specific surface area $S_{Hg}$ with respect to the pore volume $V_{Hg}$ was very high.

In Comparative Example 8, as well, the average primary particle diameter of the positive electrode active material was larger than 7 um, as in Comparative Examples 1 and 3 to 5. In Comparative Example 8, the ratio $S_{Hg}/V_{Hg}$ between $S_{Hg}$ and $V_{Hg}$ was less than 20 $m^2$/mL. It can be seen that, in Comparative Example 8, the resistance increase was larger than that in Comparative Example 1, that is, many side reactions occurred on the electrode. From this, it can be seen that even with a single-crystal active material having a uniform surface, the effect of suppressing the increase in resistance cannot be obtained when the specific surface area $S_{Hg}$ with respect to the pore volume $V_{Hg}$ is 20 or less.

According to one or more embodiment and example described above, an electrode is provided. The electrode includes an active material-containing layer containing an active material that includes a lithium-nickel-cobalt-manganese composite oxide having an average primary particle diameter of 2 um or more and 7 $\mu$m or less, as an active material. In the active material-containing layer, a specific surface area $S_{BET}$ measured by a $N_2$ gas adsorption method and a pore specific surface area $S_{Hg}$ measured by a mercury intrusion method satisfy a relationship of $0.8 < S_{BET}/S_{Hg} < 2.0$, and the pore specific surface area $S_{Hg}$ measured by the mercury intrusion method and a pore volume $V_{Hg}$ measured by the mercury intrusion method satisfy a relationship of $20\,m^2$/mL $< S_{Hg}/V_{Hg} < 60\,m^2$/mL. The above electrode can provide a battery and battery pack excellent in life performance.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1.  An electrode comprising an active material-containing layer containing an active material,

    the active material including a lithium-nickel-cobalt-manganese composite oxide having an average primary particle diameter of 2 um or more and 7 $\mu$m or less,
    a specific surface area $S_{BET}$ of the active material-containing layer according to a $N_2$ gas adsorption method and a pore specific surface area $S_{Hg}$ of the active material-containing layer according to a mercury intrusion method satisfy a relationship of $0.8 < S_{BET}/S_{Hg} < 2.0$, and
    the pore specific surface area $S_{Hg}$ of the active material-containing layer and a pore volume $V_{Hg}$ of the active material-containing layer according to the mercury intrusion method satisfy a relationship of $20\,m^2$/mL $< S_{Hg}/V_{Hg} < 60\,m^2$/mL.

2.  The electrode according to claim 1, wherein a density of the active material-containing layer is more than 3.0 $g/cm^3$ and less than 3.6 $g/cm^3$.

3.  The electrode according to claim 1, wherein the pore volume $V_{Hg}$ is within a range of $0.03\,mL/g \leq V_{Hg} \leq 0.15\,mL/g$.

4.  The electrode according to claim 1, wherein the specific surface area $S_{BET}$ is within a range of $1.0\,m^2/g \leq S_{BET} \leq 5.0$

m$^2$/g.

5. The electrode according to claim 1, wherein a density of the active material-containing layer is more than 3.0 g/cm$^3$ and less than 3.6 g/cm$^3$, the pore volume $V_{Hg}$ is within a range of 0.03 mL/g $\leq V_{Hg} \leq$ 0.15 mL/g, and the specific surface area $S_{BET}$ is within a range of 1.0 m$^2$/g $\leq S_{BET} \leq$ 5.0 m$^2$/g.

6. The electrode according to any one of claims 1 to 5, wherein a specific surface area of the active material according to the N$_2$ gas adsorption method is 0.5 m$^2$/g or more and 2.0 m$^2$/g or less, a particle diameter $D_{50}$ at which a cumulative frequency from a small particle diameter side in a particle size distribution of the active material-containing layer is 50% falls within a range of 2 um $\leq D_{50} \leq$ 7 um, and a ratio $D_{90}/D_{10}$ of a particle diameter $D_{90}$ at which the cumulative frequency from the small particle diameter side in the particle size distribution is 90% to a particle diameter $D_{10}$ at which the cumulative frequency from the small particle diameter side in the particle size distribution is 10% falls within a range of 1.0 $\leq D_{90}/D_{10} \leq$ 5.0.

7. The electrode according to any one of claims 1 to 6, wherein the active material has a true specific gravity of 4.0 g/cm$^3$ or more and 6.0 g/cm$^3$ or less.

8. The electrode according to any one of claims 1 to 7, wherein the lithium-nickel-cobalt-manganese composite oxide includes a compound represented by $Li_aNi_{(1-b-c-d)}Co_bMn_cM_dO_2$, where $1 \leq a \leq 1.2$, $0 \leq b \leq 0.4$, $0 \leq c \leq 0.4$, and $0 \leq d \leq 0.1$, and M contains at least one selected from the group consisting of Fe, Cu, Ti, Mg, Al, W, Y, B, Mo, Nb, Zn, Sn, Zr, Ga, and V.

9. A battery comprising:

   the electrode according to any one of claims 1 to 8; and
   an electrolyte.

10. A battery pack comprising the battery according to claim 9.

3c

3

3b

3a

# F I G. 1

F I G. 2

F I G. 3

F I G. 4

F I G. 5

F I G. 6

## INTERNATIONAL SEARCH REPORT

| International application No. |
|---|
| **PCT/JP2022/000031** |

### A. CLASSIFICATION OF SUBJECT MATTER

*H01M 4/131*(2010.01)i; *H01M 4/525*(2010.01)i
FI: H01M4/131; H01M4/525

According to International Patent Classification (IPC) or to both national classification and IPC

### B. FIELDS SEARCHED

Minimum documentation searched (classification system followed by classification symbols)

H01M4/131; H01M4/525

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2005-123179 A (MITSUBISHI CHEMICALS CORP) 12 May 2005 (2005-05-12)<br>entire text, all drawings | 1-10 |
| A | JP 2014-139119 A (TOSOH CORP) 31 July 2014 (2014-07-31)<br>entire text, all drawings | 1-10 |
| A | WO 2017/208703 A1 (HITACHI METALS LTD) 07 December 2017 (2017-12-07)<br>entire text, all drawings | 1-10 |
| A | JP 2011-228292 A (MITSUBISHI CHEMICALS CORP) 10 November 2011 (2011-11-10)<br>paragraphs [0046]-[0061] | 1-10 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 March 2022** | **15 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/000031**

| Patent document cited in search report | | | Publication date (day/month/year) | Patent family member(s) | | | Publication date (day/month/year) |
|---|---|---|---|---|---|---|---|
| JP | 2005-123179 | A | 12 May 2005 | US | 2006/0134521 | A1 | |
| | | | | entire text, all drawings | | | |
| | | | | WO | 2005/031899 | A1 | |
| | | | | EP | 1667260 | A1 | |
| | | | | KR | 10-2006-0066120 | A | |
| | | | | CN | 1856890 | A | |
| JP | 2014-139119 | A | 31 July 2014 | WO | 2014/098238 | A1 | |
| | | | | TW | 201431794 | A | |
| WO | 2017/208703 | A1 | 07 December 2017 | US | 2018/0261840 | A1 | |
| | | | | entire text, all drawings | | | |
| | | | | EP | 3467916 | A1 | |
| | | | | KR | 10-2018-0031768 | A | |
| | | | | CN | 108028375 | A | |
| JP | 2011-228292 | A | 10 November 2011 | US | 2013/0029216 | A1 | |
| | | | | paragraphs [0103]-[0128] | | | |
| | | | | WO | 2011/125722 | A1 | |
| | | | | EP | 2555287 | A1 | |
| | | | | CN | 102823033 | A | |
| | | | | KR | 10-2013-0076795 | A | |

Form PCT/ISA/210 (patent family annex) (January 2015)

**REFERENCES CITED IN THE DESCRIPTION**

**Patent documents cited in the description**

- WO 2016195036 A

- JP 2012243463 A